(19) Europäisches Patentamt
European Patent Office
Office européen des brevets

(11) **EP 2 689 820 A1**

(12) **EUROPEAN PATENT APPLICATION**

(43) Date of publication:
**29.01.2014 Bulletin 2014/05**

(51) Int Cl.:
**B01D 53/14** (2006.01)  **B01D 53/18** (2006.01)
**B01D 47/12** (2006.01)

(21) Application number: **12178316.1**

(22) Date of filing: **27.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nederlandse Organisatie voor Toegepast -Natuurwetenschappelijk Onderzoek TNO**
**2628 VK Delft (NL)**

(72) Inventors:
• **Goetheer, Earl Lawrence Vincent**
**2628 VK Delft (NL)**

• **Matic, Ana**
**2628 VK Delft (NL)**
• **Khakharia, Purvil Maganlal**
**2628 VK Delft (NL)**
• **Tuinman, Ilse Lilian**
**2628 VK Delft (NL)**
• **de Miguel Mercader, Ferran**
**2628 VK Delft (NL)**
• **Booth, Nicholas Jarvis**
**2628 VK Delft (NL)**

(74) Representative: **Jansen, Cornelis Marinus et al**
**V.O.**
**Johan de Wittlaan 7**
**2517 JR Den Haag (NL)**

(54) **Amine reduction in aerosols**

(57)    The invention is directed to a method for lowering the amine content in an aerosol. More in particular, the invention relates to a post-combustion carbon dioxide capture process, wherein the content of an amine in an aerosol is lowered.

The method of the invention for lowering the content of one or more amines in an aerosol comprising said one or more amines solubilised in aqueous aerosol droplets, comprises heating the aerosol and washing the aerosol with aqueous acid solution having a water activity which is lower than the water activity of the aqueous aerosol droplets.

Figure 3

**Description**

The invention is directed to a method for lowering the amine content in an aerosol. More in particular, the invention relates to a post-combustion carbon dioxide capture process, wherein the content of an amine in an aerosol is lowered.

The continued usage of fossil fuels for energy production is commonly associated with the globally observed climate change. The combustion of such fuels produces carbon dioxide, a so-called greenhouse gas which is typically released into the atmosphere. Nowadays it is a common viewpoint that carbon dioxide released into the atmosphere plays a major role in global climate change. Hence, the reduction of carbon dioxide emissions from fossil fuel combustion and other sources has been drawing interest as a primary means of mitigating climate change and global warming. Carbon dioxide capture involves the separation of carbon dioxide from an effluent stream. Advantageously, the carbon dioxide can thereafter be compressed to a liquid or dense phase or supercritical state for transportation. It may then be injected into geological reservoirs (e.g. oil and gas fields, or deep saline aquifers), where the geological structure and processes are expected to store the carbon dioxide.

A major part of carbon dioxide emissions stems from the electricity sector, primarily from coal-fired power plants. A wide variety of industrial facilities also emit carbon dioxide as a by- or co-product of the industrial processes inherent to their industry, such as ethanol fermentation, oil and gas refining, chemical (including ethylene and ethylene oxide) production, hydrogen production, as well as other manufacturing industries such as pulp and paper, iron and steel, ammonia and fertiliser, and cement manufacturing. Carbon dioxide in exhaust (gas) streams is present to various extents, at various temperatures and pressures, and with various other constituents (including $NO_x$, $SO_2$).

There are commercially available carbon dioxide capture technologies that are currently being used in various industrial applications and being tested for power plant capture in pilot and demonstration projects. However, these technologies are still not widely used, primarily because they either have not been demonstrated at the scale necessary for power plant application, or they would not be cost effective.

Presently, there is ongoing research to the capture and storage of gaseous acid compounds (such as carbon dioxide), resulting in various methods available for the removal of gaseous acid compounds from exhaust gas streams.

A classical method for chemical absorption of carbon dioxide from exhaust gases (post-combustion carbon dioxide capture) involves reactive absorption followed by regeneration of the absorbent liquid in a desorber. Absorption processes typically utilise the reversible chemical reaction of carbon dioxide with an aqueous alkaline solvent, usually an amine. In the desorber, the absorbed carbon dioxide is stripped from the solution and a stream of carbon dioxide is sent for compression while the regenerated solvent is sent back to the absorber. Accordingly, the term "solvent" as used in this application in the context of such reactive absorption/desorption processes is meant to refer to a liquid absorbent capable of chemically absorbing a gaseous acid compound, such as carbon dioxide. Such liquid absorbent can suitably be an aqueous amine solution.

A number of solvent systems have been proposed and studied for carbon dioxide capture by chemical absorption. Amines used to capture carbon dioxide from gaseous streams react to form water soluble compounds, which for instance upon heating release the carbon dioxide. Monoethanolamine (MEA) has been the most widely studied system. Other amines that have been studied include secondary amines such as piperazine (PZ) and tertiary amines such as N-methyldiethanolamine (MDEA). Sterically hindered amines such as 2-amino-2-methyl-1-propanol (AMP) have also been investigated. The  performance of hindered amines was found to be better suited to absorption in higher carbon dioxide partial pressure atmospheres. Mixed amine blends are designed to take advantage of the desirable properties in a primary and a tertiary and/or sterically hindered amine. It is desired that these have the high capacity and low heat of absorption characteristic of tertiary and/or sterically hindered amines and the fast rate of reaction characteristic of primary amines. This will lead to reduced circulation rates of the solvent. Particular interest has been focused on MEA/ MDEA, MEA/AMP, and AMP/PZ blends with pilot plant studies having been conducted. Investigations on blends of diglycolamine (DGA) and MDEA have also been conducted. Other systems that have been proposed include using ammonia-based solutions and solutions of amino acids as absorbent for carbon dioxide capture.

A drawback of the conventional absorption processes for carbon dioxide capture is that the vent gas of the absorber can comprise aerosol droplets that may contain components that are harmful to the environment. In particular, the aerosol droplets may comprise amine components from the absorbent liquid, such as MEA, MDEA, AMP, DGA, and the like. Emission of these components is undesirable and, accordingly, there is a need for removal of such components from the vent gas.

Aerosols can be formed by spontaneous condensation or desublimation mechanisms in supersaturated gases, for instance by chemical reactions in the gas phase followed by desublimation of the generated components, or by crossing the dew point line by simultaneous mass and heat transfer processes.

However, the removal of environmentally harmful components that may be present in the vent gas aerosol is not easy. Efforts towards the reduction of such emissions are conventionally based on the removal of the aerosol from the gas stream, such as through applying filters, wet electrostatic scrubbers, internal column configurations, *etc*. For example, Schaber (*Chemical Engineering Science* 1995, *50*(8), 1347-1360) describes a scientific study on how to avoid or suppress aerosol formation by applying favourable operating conditions or by applying specific scrubbing liquids. US-B-7 025 808 describes a process for reducing aerosol-related discharge from a separation column, wherein the separation column internals are configured in a specific manner. US-B-7 867 322 describes a method of cleaning a process gas containing sulphur dioxide by applying acid wash. WO-A-2009/091437 teaches a method for carbon dioxide capture wherein a wet electrostatic precipitator is applied for removing aerosols and fine particulate matter from the flue gas.

Still there remains a need for alternative methods for reducing the aerosol-based emissions that are simpler and cheaper, and to effectively remove harmful components solubilised in aerosol, also when an aerosol has already been formed.

A first objective of the invention is to provide a method for lowering the content of an amine in an aerosol.

A further objective of the invention is to reduce and/or neutralise the amine components that may be present in an aerosol.

Yet a further objective of the invention is to reduce the average droplet diameter of aerosol droplets.

Yet a further objective of the invention is to provide an absorption/desorption-based carbon capture process having a minimum of environmentally harmful emission in the form of aerosols.

The inventors found that one or more of these objectives can, at least in part, be met by heating the aerosol and subjecting the aerosol and resulting vapour to an acid wash.

Accordingly, in a first aspect the invention is directed to a method for lowering the content of one or more amines in an aerosol comprising said one or more amines solubilised in aqueous aerosol droplets, said method comprising heating the aerosol and washing the aerosol with aqueous acid solution having a water activity which is lower than the water activity of the aqueous aerosol droplets.

The inventors found that the invention leads to a surprisingly lower amine content in the resulting aerosol. For the case of carbon dioxide capture, this advantageously allows a reduction of the amine content in the aerosol that is comprised in the vent gas. Without wishing to be bound by any theory, the inventors believe that the increase in temperature leads to evaporation of water from the aqueous aerosol droplets when in contact with the aqueous acid solution, because the water activity in the aerosol droplets is higher than in the aqueous acid solution. As a result of the water evaporation, the average aerosol droplet diameter decreases. In turn, this increases the contact surface area between the vapour phase and the aerosol dispersed phase, thereby facilitating transfer of the one or more amines from the aerosol dispersed phase to the vapour phase. Thus, evaporation of the amine from the aerosol droplets to the vapour phase is believed to be enhanced due to the increase in contact surface area. The evaporated amine is further absorbed by the acid wash liquid phase where it is maintained at low levels by the neutralisation reaction between the amine and the acid. Hence, the absorption of the amine from the vapour phase to the acid wash liquid phase is enhanced by the chemical reaction between the acid and the amine. Due to the decrease in the amine concentration in the vapour phase, the equilibrium between the amine present in the aerosol droplet phase and the amine present in the vapour phase shifts, thereby further promoting transfer of the amine from the aerosol dispersed phase to the vapour phase and further absorption in the acid wash liquid phase where the amine will be neutralised by the acid. As a result, the driving force for removing the amine from the aerosol in the method of the invention is very high.

The term "amine" as used in this application is meant to refer to any compound formally derived from ammonia by replacing one, two or three hydrogen atoms by hydrocarbyl groups. The term "amine" is meant to include primary amines having the general structure $RNH_2$, secondary amines having the general structure $R_2NH$, as well as tertiary amines having the general structure $R_3N$ (tertiary amines).

The term "aerosol" as used in this application is meant to refer to a suspension of a solid or liquid or a mixture of both in a gas, and is meant to encompass any associated vapours. In particular, in the context of the present invention the aerosol dispersed phase preferably comprises a liquid. The aerosol dispersed phase droplets are then referred to as the "aerosol droplets". Typically, the aerosol droplet diameter ranges from 0.001 to over 100 $\mu$m. The continuous phase preferably comprises the vent gas of an absorber.

The term "water activity" as used in this application is meant to refer to its commonly accepted meaning of the ratio of the equilibrium vapour pressure of water above a substance to the vapour pressure of pure water, both taken at the same temperature. Accordingly, the water activity of the liquid acid is the ratio of the equilibrium vapour pressure of water above the liquid acid to the vapour pressure of pure water, both taken at the same temperature. Similarly, the water activity of the aerosol droplets is the ratio of the equilibrium vapour pressure of water above the aerosol droplets to the vapour pressure of pure water, both taken at the same temperature. The water activity of the aerosol droplets can, for instance, be determined by using electrodynamic balance (see for instance Liang et al., Aerosol Sci. Technol. 1997, 26(3), 255-268).

In accordance with the invention, the one or more amines are solubilised in aqueous aerosol droplets. Typically, the one or more amines that are solubilised in aqueous aerosol droplets are in equilibrium with one or more amines that are present in the vapour phase. Preferably, the one or more amines comprise an alkanolamine. In an embodiment, the one or more amines comprise one or more selected from the group consisting of monoethanolamine, diethanolamine, piperazine, N-methyldiethanolamine, diethylamine, triethylamine, diethylenetriamine, and 2-amino-2-methyl-1-propanol, preferably said one or more amines comprise one or more selected from monoethanolamine, *N*-methyldiethanolamine and 2-amino-2-methyl-1-propanol, more preferably said one or more amines comprise monoethanolamine. It is also possible that a mixture of two or more of the above amines is comprised in the aerosol droplets.

Typically, the amount of the one or more amines in the aerosol can initially (*i.e.* prior to heating and acid washing) be in the order of 0.1-4 mol/l, such as in the range of 0.2-1.5 mol/l, or in the range of 0.7-1 mol/l.

In a preferred embodiment, the aerosol is comprised in a vent gas stream of an absorber (*i.e.* the gas stream leaving the absorber and depleted in absorbed species). Preferably, the vent gas stream, comprising the one or more amines, is scrubbed in a water wash. In such a water wash step a stream of aqueous washing liquid (preferably water) is typically supplied to a water wash vessel where the gas stream is washed, preferably by counter current flow to water in a packing. The aqueous washing liquid preferably has a temperature which is lower than the temperature of the gas stream comprising the one or more amines. The aqueous washing liquid can typically have a temperature in the range of 20-50 °C, preferably in the range of 30-35 °C. The aqueous washing liquid can be introduced into the water wash vessel and distributed over the packing by means of aqueous washing liquid distributors. Aqueous washing liquid may be collected and recycled to the water washing vessel, such as via an aqueous washing liquid supply tank. In an embodiment the gas stream is cooled during the aqueous washing. This may be advantageous so as to condense and remove water from the passing gas stream. In order to cool the gas stream, the aqueous washing liquid may optionally be actively cooled. Contaminants initially contained in the gas stream and that are washed from the gas by the aqueous washing liquid may suitably be removed via a bleed line.

The method of the invention comprises heating the aerosol. Preferably, before said heating the aerosol has a temperature in the range of 20-50 °C, more preferably in the range of 30-45 °C.

Suitably, heating of the aerosol results in the temperature of the aerosol being increased by a temperature difference in the range of 5-50 °C, preferably in the range of 10-40 °C, more preferably in the range of 10-25 °C. Such a temperature increase results in evaporation of water and ensures an increase in the contact area between the aerosol dispersed phase and the vapour phase so as to facilitate transfer of amine from the aerosol dispersed phase into the vapour phase.

Heating the aerosol can be achieved in different manners, such as by indirect gas-gas or gas-liquid heating, or by direct gas-liquid heating. Accordingly, in an embodiment the heating comprises indirect gas-gas or gas-liquid heating wherein the aerosol is indirectly heated by a heat transfer surface using a gas or liquid prior to being subjected to said washing with aqueous acid solution.

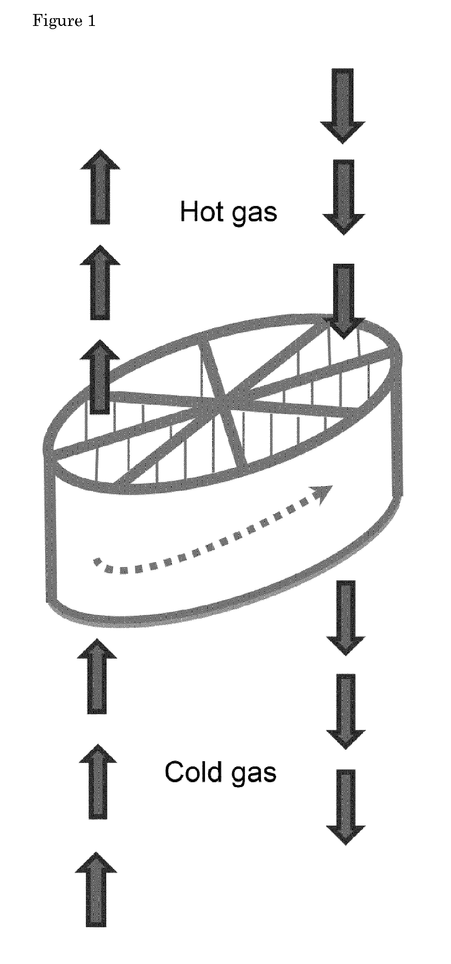

In indirect gas-gas heating, the (relatively) cold aerosol can be contacted with a (relatively) hot heating surface, which in itself is heated by another hot gas stream, so as to heat the aerosol. Hence, in an embodiment, heating of the aerosol comprises gas-gas heating wherein the aerosol is heated using a heated surface transferring heat from another gas prior to being subjected to the washing with aqueous acid solution. This can, for instance, be performed by means of a rotary regenerative gas-gas heater, also known as a Ljungstrom-type reheater. Such equipment comprises a circular rotating bed (called rotor) packed with specially formed sheets of heat transfer surface. The rotor contains two sections, one for the hot gas and one for the cold gas. The heat is transferred from the hot gas to the cold gas via the packed sheets in the rotor. An example of such a rotary regenerative gas-gas heater is shown in figure 1. Vent gas stemming from an absorption process can, for example, be heated up using hot air on the hot side of the gas-gas heater. The heat can be obtained from any available hot streams in surrounding processes. As an example, the hot exhaust gas prior to an absorber could be used as a heating medium. By this, two operations can favourably be integrated: cooling the hot exhaust gas and heating up the vent gas before being subjected to acid wash.

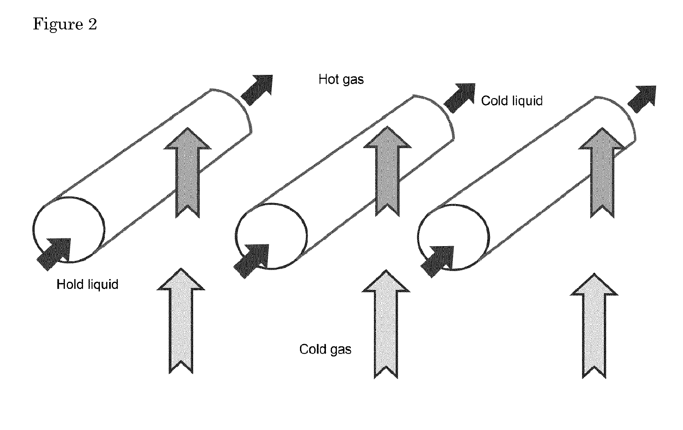

Indirect gas-liquid heating is also possible. The (relatively) cold aerosol is then contacted with a (relatively) hot heating surface, which in itself is heated by a hot liquid, such as by passing a hot liquid through pipes placed within the gas path. In this way, heat is transferred from the hot liquid through the pipe wall material to the aerosol containing stream. Accordingly, the aerosol may be reduced in size and the amine contained within the aerosols released to the vapour phase to enable scrubbing with aqueous acid solution. An example of such an indirect gas-liquid heater is shown in figure 2. This method of indirect heating with pipes is equally applicable for steam heating in place of the liquid.

An example of direct gas-liquid heating can be pre-heating of the aqueous acid solution. Upon contact of the aqueous acid solution with the aerosol, the aerosol will automatically be heated. Heat is then transferred to the aerosol by contacting in the acid washing.

The aqueous acid solution used for washing the aerosol can comprise one or more acids selected from the group consisting of sulphuric acid, nitric acid, phosphoric acid, and hydrochloric acid. Preferably, the aqueous acid solution comprises sulphuric acid.

Preferably, the aqueous acid solution has a pH value in the range of 1-6, preferably in the range of 2-4. If the pH value of the aqueous acid solution is higher than 6, then there is a risk that not all amine will be neutralised. As a result some amine will remain in the vent gas which will lead to undesirable emissions. In addition, a high pH value may lead to a change in water activity of the aqueous acid stream, and it could lead to the evaporation of water from the aqueous acid stream which is undesirable. A low pH (such as less than 1) is also not desirable, because it complicates neutralisation of the bleed stream.

Suitably, the aqueous acid solution can be an aqueous acid solution, such as an aqueous solution of sulphuric acid, preferably having a concentration in the range of 0.0005-50 mM, more preferably in the range of 0.05-5 mM.

During heating of the aerosol, the average aerosol droplet diameter decreases due to evaporation from the droplet, typically of water and amine. Hence, in an embodiment the average aerosol droplet diameter before carrying out the method of the invention is larger than the aerosol droplet diameter after having carried out the method of the invention. More preferably, the average aerosol droplet diameter before heating is larger than the aerosol droplet diameter after heating. The initial (*i.e.* prior to heating) aerosol droplet diameter may be in the range of 5 $\mu$m to 20 $\mu$m, preferably in the range of 7-15 $\mu$m, such as about 10 $\mu$m. Note that the aerosol droplet diameter distribution can be very broad and the aerosol may comprise aerosol droplets having a diameter in the range of 10 nm to 25 $\mu$m. After heating, the average aerosol droplet diameter may be in the range of 1-10 $\mu$m, such as in the range of 2-5 $\mu$m. Measurement methods for determining absolute and average aerosol droplet diameters are well known in the art. These diameters can for instance be determined using an electrical low pressure impactor (ELPI) or an aerodynamic particle sizer (APS).

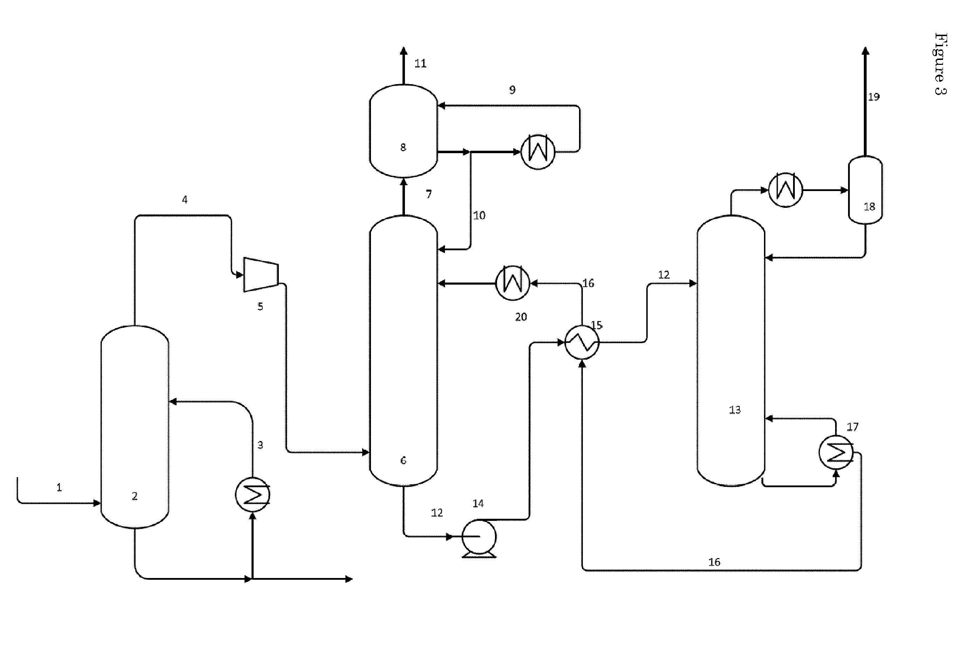

In an attractive embodiment, the present invention is comprised in an absorption process wherein one or more of the amines are used as absorbent. More particularly, the invention can be applied in an absorption/desorption-based process for the capture of gaseous acid compounds (such as carbon dioxide) from an exhaust gas. Such processes are well-known in the art. An example of conventional post-combustion carbon dioxide capture technology using an absorption/desorption process is schematically depicted in the simplified flow diagram of figure 3. In the example of figure 3, flue gas 1 (*e.g.* from a power plant) enters direct contact cooler 2, where it is cooled with circulating water 3. Subsequently, gas 4 is transported with gas blower 5 to absorber 6. The gas flows through the packed bed absorbed 6 counter currently with an amine absorbent (typically an aqueous amine solution, such as an aqueous monoethanolamine solution), in which the amine absorbent reacts chemically with carbon dioxide (packed bed columns are preferred over plate columns because of their higher contact area). Carbon dioxide lean gas 7 enters water wash scrubber 8 in which water and amine vapour and droplets 10 are recovered and recycled back into absorber 6 to decrease the solvent loss. Treated gas 11 is typically vented to the atmosphere.

Rich absorbent 12 containing chemically bound carbon dioxide is fed to the top of stripper 13 with pump 14 via lean/rich cross heat exchanger 15 in which rich absorbent 12 is heated and the carbon dioxide lean absorbent 16 is cooled. The amine absorbent is regenerated in the stripper 13. Heat is supplied to reboiler 17 using low-pressure steam to maintain regeneration conditions. Steam is recovered in condenser 18 and fed back to stripper 13, after which produced carbon dioxide gas 19 leaves condenser 18. Finally, lean solvent 16 is pumped back to absorber 6 via the lean/rich heat exchanger 15 and cooler 20 to bring its temperature down to the absorber level.

As mentioned, amine based absorbents (such as monoethanolamine) are commonly used in these processes. The vent gas stream leaving the absorber column is typically introduced to a water wash section in order to decrease the solvent loss and to maintain the water balance (water scrubber 8 in figure 2). Still, after the water wash section the gas stream leaving the aqueous liquid wash section (gas stream 11 in figure 2) contains significant amount of amine, mostly in the form of aerosols. The process of the invention can suitably be implemented in such a conventional absorption/desorption based processes for the capture of gaseous acid compounds from an exhaust gas so as to reduce the amount of one or more amines in the gas stream in the form of aerosol leaving the water wash section.

Therefore, in a special aspect, the invention is directed to a post-combustion process for capturing one or more gaseous acid compounds comprising a method according to the invention. Typically, the one or more gaseous acid compounds can comprise one or more from the group consisting of carbon dioxide, sulphur dioxide, sulphur trioxide, nitrogen dioxide, hydrogen fluoride, hydrogen sulphide, and hydrochloric acid. Such post-combustion capture process may capture gaseous acid compounds from an exhaust gas that originates, *e.g.* from coal-fired power plant. The process preferably comprises the steps of

i) contacting an exhaust gas stream with an absorbent lean in said one or more gaseous acid compounds, thereby obtaining a gas stream depleted of said one or more gaseous acid compounds and an absorbent rich in said one or more gaseous acid compounds;

ii) regenerating the rich absorbent by desorbing gaseous acid compounds from said rich absorbent to produce lean absorbent; and

iii) recycling lean absorbent to contacting step i),

wherein said gas stream depleted of said one or more gaseous acid compounds comprises an aerosol with one or more amines solubilised in aqueous aerosol droplets and wherein the content of said one or more amines is lowered by a method comprising heating the aerosol and washing the aerosol with aqueous acid solution having a water activity which is lower than the water activity of the aqueous aerosol droplets.

Preferably, the gas stream depleted of one or more gaseous acid compounds is first subjected to a washing step using an aqueous washing liquid before being heated and washed with aqueous acid solution.

In an embodiment, at least part of the one or more amines are comprised in the liquid absorbent. In other words, the liquid absorbent can comprise one or more of said amines.

The invention will now be further elucidated by means of the following example which is not intended to limit the invention in any manner.

Example

An estimate was made on the amount of monoethanolamine emission that can be removed using the invention. The reaction of monoethanolamine with the acid can be considered to be instantaneous with an extremely high enhancement factor, thus the transfer of gas phase monoethanolamine to the liquid acid is a fast process. The rate limiting step is therefore the evaporation of free monoethanolamine in the dispersed (liquid) phase to the vapour phase. A rough estimate for the evaporation of monoethanolamine can be made using the Hertz-Langmuir equation for rate of evaporation as given below

$$\frac{dM}{dt} = \left(p_v - p_p\right)\sqrt{\frac{m}{2 \cdot \pi \cdot R \cdot T}} \; ,$$

wherein $dM/dt$ is the mass loss rate of component per unit area in kg/s/m$^2$, $p_v$ is the vapour pressure of the component at the specific temperature in N/m$^2$, $p_p$ is the partial pressure of the component in N/m$^2$, $m$ is the molecular mass in g/mol, $R$ is the universal gas constant in J/mol/K, and $T$ is the absolute temperature in K.

The Hertz-Langmuir equation is an estimate and applicable for pure liquids. Nevertheless, it can be used to compare the rate of evaporation at two different temperatures. The values used for the calculation are mentioned in table 1.

Table 1 Assumptions for calculation

|  | Value (43 °C) | Value (60 °C) | Unit |
|---|---|---|---|
| $p_v$ vapour pressure of MEA | 213.3 | 680 | N/m$^2$ |
| $T$ absolute temperature | 316.15 | 333.15 | K |
| $m$ molecular mass | 61 |  | g/mol |
| $R$ universal gas constant | 8.314 |  | J/mol/K |
| Pressure | 101000 |  | N/m$_2$ |

Table 2 lists assumed aerosol droplet properties. The average aerosol droplet diameter is assumed to be 10 $\mu$m, but the actual aerosol droplet diameter can range from 10 nm to 25 $\mu$m, while the number of aerosol droplets in 1 Nm$^3$ gas is assumed to be 10$^{10}$, but can vary from 10$^6$ to 10$^{18}$ depending on factors such as flue gas condition, capture plant operation, *etc*.

Table 2 Assumptions for aerosol droplet properties

|  | Value | Unit |
|---|---|---|
| Average aerosol droplet diameter | 10 | $\mu$m |
| Number of aerosol droplets | 10$^{10}$ | Basis: 1 Nm$^3$ of gas |

The partial pressure of MEA in the acid wash phase is negligible as all the MEA present in the acid wash phase is neutralised by the acid. Thus, by increasing the temperature from 43 °C to 60 °C, the evaporation rate of MEA from the aerosol droplet phase can be increased by a factor of 3.1. Moreover, the increase in temperature would also lead to loss in water which would reduce the size of aerosols. An increase in temperature from 43 °C to 60 °C, would decrease the droplet size from 10 $\mu$m to 9 $\mu$m. The corresponding increase in surface area is by a factor of 1.1. Combining the two factors, one due to the increased evaporation rate and the other due to higher surface area, would enhance the process of evaporation of MEA from the droplet phase to the vapour phase by a factor of 3.4. Typically, a packed column would be used for reducing the MEA in aerosol dispersed phase with a counter-current acid wash circulation. The increase in the evaporation rate of MEA from the droplet phase to the vapour phase by a factor of 3.4 would significantly reduce the height of such a packed column.

Therefore, based on the calculation results it can be concluded that the introduction of the acid wash section after a water-wash section in a carbon dioxide capture plant improves the reduction of the monoethanolamine in the form of aerosols significantly.

**Claims**

1. Method for lowering the content of one or more amines in an aerosol that comprises said one or more amines solubilised in aqueous aerosol droplets, said method comprising heating the aerosol and washing the aerosol with aqueous acid solution having a water activity which is lower than the water activity of the aqueous aerosol droplets.

2. Method according to claim 1, wherein said one or more amines comprise an alkanolamine,
   preferably said one or more amines comprise one or more selected from the group consisting of monoethanolamine, diethanolamine, piperazine, *N*-methyldiethanolamine, diethylamine, triethylamine, diethylenetriamine, and 2-amino-2-methyl-1-propanol,
   more preferably said one or more amines comprise one or more selected from monoethanolamine, *N*-methyldiethanolamine and 2-amino-2-methyl-1-propanol,
   most preferably said one or more amines comprise monoethanolamine.

3. Method according to claim 1 or 2, wherein said aerosol is comprised in a vent gas stream of an absorber, wherein said vent gas stream is preferably scrubbed in a water wash.

4. Method according to claim 3, wherein during said aqueous washing the gas stream comprising the one or more amines is cooled.

5. Method according to claim 3 or 4, wherein said vent gas stream is the vent gas stream of an absorption process wherein one or more of said amines are used as absorbent, preferably said absorption process is an absorption process wherein gaseous acid compounds are absorbed from a feed gas.

6. Method according to claim 5, wherein said gaseous acid compounds comprise carbon dioxide.

7. Method according to any one of claims 1-6, wherein said aerosol before heating has a temperature in the range of 20-50 °C, preferably in the range of 30-45 °C.

8. Method according to any one of claims 1-7, wherein said aerosol is heated by a temperature increase in the range of 5-50 °C, preferably in the range of 10-40 °C, more preferably in the range of 10-25 °C.

9. Method according to any one of claims 1-8, wherein said heating comprises indirect gas-gas or gas-liquid heating wherein the aerosol is indirectly heated by a heat transfer surface using a gas or liquid prior to being subjected to said washing with aqueous acid solution, preferably said indirect heating is performed by means of a rotary regenerative gas-gas heater or tubular gas-liquid heater.

10. Method according to any one of claims 1-8, wherein said heating comprises direct gas-liquid heating wherein the aqueous acid solution is pre-heated so as to heat the aerosol.

11. Method according to any one of claims 1-10, wherein said aqueous acid solution comprises one or more selected from the group consisting of sulphuric acid, nitric acid, phosphoric acid, and hydrochloric acid.

12. Method according to any one of claims 1-11, wherein said aqueous acid solution has a pH in the range of 1-6, preferably in the range of 2-4.

13. Method according to any one of claims 1-12, wherein the average aerosol droplet diameter before said method is larger than after said method.

14. Method according to any one of claims 1-13, wherein before heating the aerosol, the average aerosol droplet diameter ranges from 5 $\mu$m to 25 $\mu$m.

15. Post-combustion process for capturing one or more gaseous acid compounds comprising a method according to any one of claims 1-14.

Figure 1

Hot gas

Cold gas

Figure 2

Hot gas

Cold liquid

Hold liquid

Cold gas

Figure 3

Europäisches
Patentamt

European
Patent Office

Office européen
des brevets

**EUROPEAN SEARCH REPORT**

Application Number

EP 12 17 8316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/308389 A1 (GRAFF OSCAR FREDRIK [NO] ET AL) 22 December 2011 (2011-12-22) * paragraphs [0001], [0017], [0021], [0027], [0045] - [0047], [0061], [0063]; claims 4-6; figures 2-4 * | 1-8, 10-15 | INV. B01D53/14 B01D53/18 B01D47/12 |
| X | JP 10 033938 A (MITSUBISHI HEAVY IND LTD) 10 February 1998 (1998-02-10) * figure 1 * | 1-8, 11-15 | |
| X | US 2011/146489 A1 (DUBE SANJAY KUMAR [US] ET AL) 23 June 2011 (2011-06-23) * paragraphs [0027], [0028]; figure 1 * | 1,2,5-7, 12-15 | |
| X | FR 2 958 180 A1 (INST FRANCAIS DU PETROLE [FR]) 7 October 2011 (2011-10-07) * claims 1,2,3,12,13 * | 1-8, 11-15 | |
| A | EP 0 798 029 A2 (KANSAI ELECTRIC POWER CO [JP]; MITSUBISHI HEAVY IND LTD [JP]) 1 October 1997 (1997-10-01) * claims 1-6; figure 1 * | 1 | TECHNICAL FIELDS SEARCHED (IPC) B01D |
| A | EP 1 923 119 A1 (VERDRONCKEN FRANS [BE]; VERDRONCKEN ERIC [BE]) 21 May 2008 (2008-05-21) * paragraph [0024]; figures 1,2 * | 1 | |

The present search report has been drawn up for all claims

| Place of search | Date of completion of the search | Examiner |
|---|---|---|
| Munich | 19 December 2012 | de Biasio, Arnaldo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 8316

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2012

| Patent document cited in search report | | Publication date | Patent family member(s) | | Publication date |
|---|---|---|---|---|---|
| US 2011308389 | A1 | 22-12-2011 | AU 2010223425 | A1 | 28-07-2011 |
| | | | CA 2749823 | A1 | 16-09-2010 |
| | | | CN 102325579 | A | 18-01-2012 |
| | | | EA 201190160 | A1 | 30-03-2012 |
| | | | EP 2405989 | A1 | 18-01-2012 |
| | | | EP 2486968 | A1 | 15-08-2012 |
| | | | JP 2012520167 | A | 06-09-2012 |
| | | | US 2011308389 | A1 | 22-12-2011 |
| | | | WO 2010102877 | A1 | 16-09-2010 |
| JP 10033938 | A | 10-02-1998 | JP 3392646 | B2 | 31-03-2003 |
| | | | JP 10033938 | A | 10-02-1998 |
| US 2011146489 | A1 | 23-06-2011 | AU 2010340211 | A1 | 19-07-2012 |
| | | | CA 2784285 | A1 | 14-07-2011 |
| | | | CN 102781550 | A | 14-11-2012 |
| | | | EP 2521602 | A1 | 14-11-2012 |
| | | | KR 20120096575 | A | 30-08-2012 |
| | | | TW 201136656 | A | 01-11-2011 |
| | | | US 2011146489 | A1 | 23-06-2011 |
| | | | WO 2011084254 | A1 | 14-07-2011 |
| FR 2958180 | A1 | 07-10-2011 | NONE | | |
| EP 0798029 | A2 | 01-10-1997 | CA 2200013 | A1 | 29-09-1997 |
| | | | DE 69737617 | T2 | 20-12-2007 |
| | | | DK 0798029 | T3 | 16-07-2007 |
| | | | EP 0798029 | A2 | 01-10-1997 |
| | | | JP 9262432 | A | 07-10-1997 |
| | | | NO 971399 | A | 30-09-1997 |
| | | | US 6117404 | A | 12-09-2000 |
| EP 1923119 | A1 | 21-05-2008 | AT 482758 | T | 15-10-2010 |
| | | | EP 1923119 | A1 | 21-05-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7025808 B
- US 7867322 B
- WO 2009091437 A

**Non-patent literature cited in the description**

- **LIANG et al.** *Aerosol Sci. Technol.,* 1997, vol. 26 (3), 255-268